Europäisches Patentamt

European Patent Office

Office européen des brevets

(19)

(11) **EP 0 893 031 B1**

(12) **EUROPEAN PATENT SPECIFICATION**

(45) Date of publication and mention
of the grant of the patent:
**29.01.2003 Bulletin 2003/05**

(51) Int Cl.⁷: **H04N 9/78**

(86) International application number:
**PCT/GB97/01033**

(21) Application number: **97916568.5**

(22) Date of filing: **14.04.1997**

(87) International publication number:
**WO 97/039589 (23.10.1997 Gazette 1997/45)**

(54) **METHOD AND APPARATUS FOR DECODING COMPOSITE VIDEO SIGNALS**

VERFAHREN UND VORRICHTUNG ZUR DEKODIERUNG ZUSAMMENGESETZTER
VIDEOSIGNALE

PROCEDE ET APPAREIL DE DECODAGE DE SIGNAUX VIDEO COMPOSITES

(84) Designated Contracting States:
**DE DK FR GB IT NL SE**

(30) Priority: **12.04.1996 GB 9607592**

(43) Date of publication of application:
**27.01.1999 Bulletin 1999/04**

(60) Divisional application:
**02016981.9 / 1 263 241**

(73) Proprietor: **SNELL & WILCOX LIMITED**
**Twickenham, Middlesex TW1 1RQ (GB)**

(72) Inventors:
 • DAVIES, Mark
 **Bradshot Lea, Farnham GU9 9NE (GB)**
 • EVEMY, Jeff
 **Lyme Regis,Dorset DT7 3QF (GB)**

• WESTON, Martin
 **Petersfield, Hampshire GU39 4SS (GB)**

(74) Representative: **Garratt, Peter Douglas et al**
 **Mathys & Squire**
 **100 Grays Inn Road**
 **London WC1X 8AL (GB)**

(56) References cited:
 **EP-A- 0 360 380          EP-A- 0 616 475**
 **WO-A-90/13979          US-A- 4 985 757**

 • **PATENT ABSTRACTS OF JAPAN vol. 17, no. 437
 (E-1413), 12 August 1993 & JP 05 091532 A
 (TOSHIBA)**
 • **PATENT ABSTRACTS OF JAPAN vol. 96, no. 8,
 30 August 1996 & JP 08 098202 A (SANYO)**
 • **PATENT ABSTRACTS OF JAPAN vol. 18, no. 286
 (E-1556), 31 May 1994 & JP 06 054343 A (SHARP)**

## EP 0 893 031 B1

**Description**

This invention relates principally to the decoding but also in certain respects to the encoding of composite video signals.

A variety of techniques have been proposed for the separation of chrominance and luminance information in a composite signal. These extend in cost and complexity from the simple notch filter of inexpensive receivers to field based comb-filters having the minimum standards necessary for broadcast and sundry professional applications.

This invention strives to make the highest standards of decoding available at a cost which is reasonable. Certain of the advances which the present invention provides will find applications in encoding, for example in luminance pre-filtering.

In one aspect, the present invention consists in a method of separating chrominance and luminance information, comprising the steps of applying a chrominance luminance separation filter to a combined chrominance and high frequency luminance base-band which has been demodulated, and carrying forward information concerning the phase of demodulation for use in remodulation of cross-colour so as to permit precise combination of remodulated cross-colour and luminance.

In a further aspect, the present invention consists in apparatus for receiving a composite video signal in a first digital sample domain and providing separated luminance and chrominance in a second digital sample domain; comprising complementary chrominance and luminance filter paths, each path containing a rate converter operating from the first to the second digital sample domain, wherein there is provided in the chrominance filter path a demodulator and a chrominance/cross-colour separation filter operating on the demodulated chrominance, separated cross-colour passing through a modulator before combination with the output of the luminance filter path, information from the demodulator being carried forward for use by the remodulator.

Preferably, there is provided in each said path a synchroniser controlled at its output by output field and line syncs.

Advantageously, there is further provided a control data synchroniser for said information, similarly controlled at its output by output field and line syncs.

The invention will now be described by way of examples with reference to the accompanying drawings in which:-

Figure 1 is a block diagram of a decoder according to one aspect of the present invention;

Figure 2 is a diagram illustrating a circuit for providing adjacent samples for use in deriving difference values;

Figure 3 is a graph illustrating the location of the samples provided in accordance with Figure 2;

Figures 4 A, B and C are a series of diagrams illustrating circuits for determining differences vertically, temporally and horizontally respectively;

Figures 5, 6 and 7 are diagrams of respective chrominance separation filters;

Figure 8 is a block diagram of a decoder according to a further embodiment of the invention;

Figure 9 is a block diagram showing in more detail the input tracking circuit of Figure 8; and

Figure 10 is a block diagram showing in more detail the output tracking circuit of Figure 8.

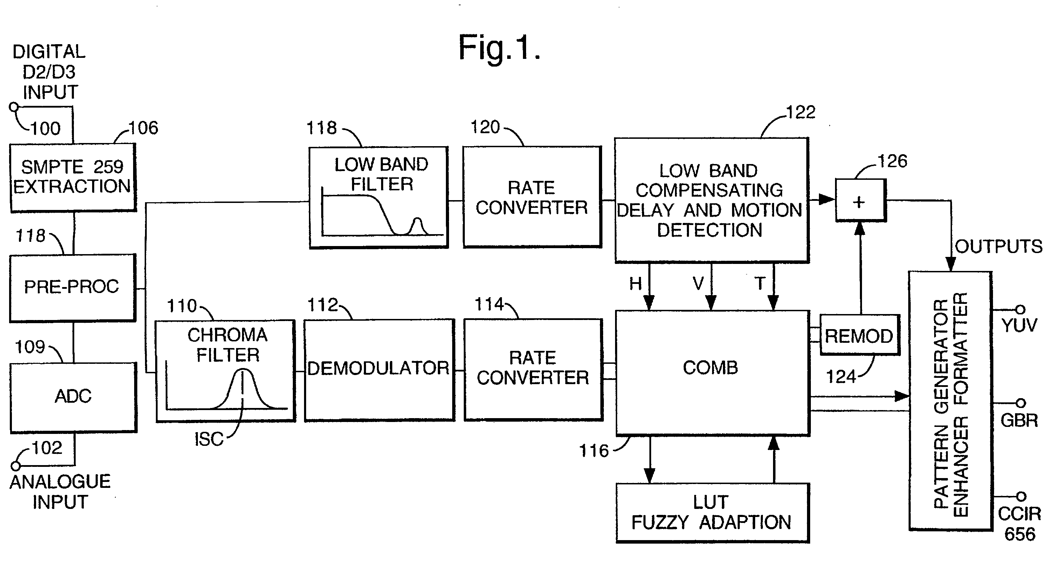

The decoder shown in Figure 1 is an NTSC decoder but a variation can readily be provided to cope with PAL as well. The input is at terminal 100 4 $f_{SC}$ sampled composite digital video (analogue composite video can be accepted at input terminal 102 via an analogue to digital converter 104). An input digital signal undergoes SMPTE 259 extraction in block 106 and appropriate pre-processing is conducted in block 108.

The composite input is separated into two complementary frequency bands, one of which is centred on colour subcarrier frequency and passes through chrominance filter 110. This combined chrominance and highfrequency luminance band is demodulated in block 112 along the U and V chrominance phase axes to form two baseband colour difference signals (including cross colour components) which are simultaneously sample-rate converted in rate converter 114 from $4f_{sc}$ to a 6.75 MHz line-locked sampling clock. These signals are applied to an adaptive comb-filter 116 which separates them into 'true' $P_B$ and $P_R$ colour difference signals and U and V axis cross-colour signals.

The second frequency band which was separated from the input comprises a mixture of low and high frequency luminance and passes through luminance filter 118; this is also rate converted in rate converter 120 to a line locked clock and delayed in block 122 by a time equal to the propagation delay of the adaptive comb-filter.

The U and V cross-colour signals from the comb-filter are remodulated onto U and V chrominance carriers in remodulator 124 and added to the low and high luminance frequency band by adder 126 to give a wide-band luminance signal. The decoder output comprises this luminance and the $P_B$ and $P_R$ colour difference signals from the adaptive comb-filter.

The timing of the outputs can be defined with respect to a reference signal by a synchroniser system which applies a variable delay to the two outputs from the band splitting filters.

The comb-filter comprises an array of filters (each having $P_B$, $P_R$, U cross-colour and V cross-colour outputs). An adaptation circuit selects the optimum filter for each pixel in the following manner:

The low frequency luminance at the output of the band splitting filter is analyzed in block 122 by comparing the current sample value with the values of vertically, horizontally and temporally adjacent samples to form three control signals corresponding to vertical, horizontal and temporal difference signals. These control signals are applied to a look-up table whose output selects one of the comb-filters.

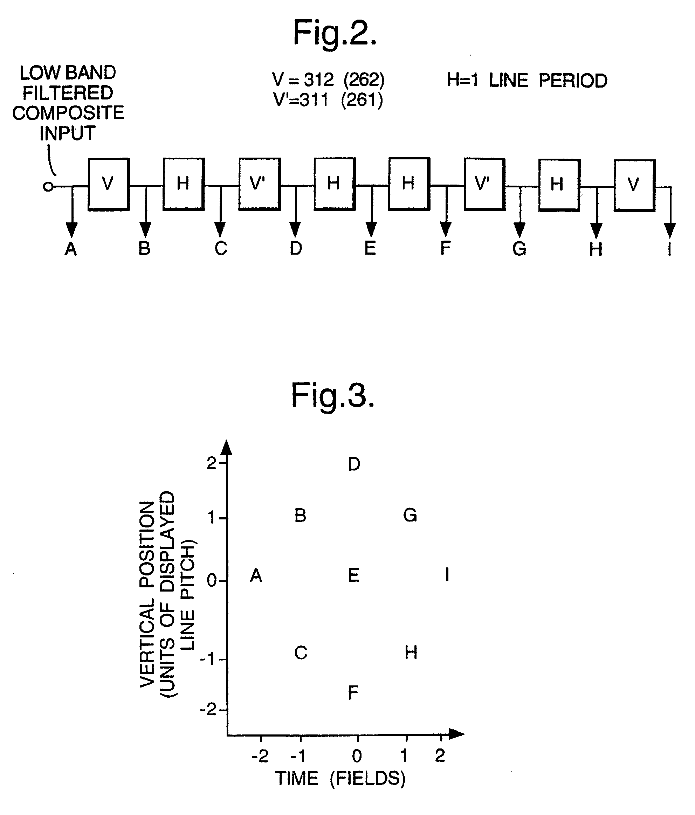

Figures 2 and 3 show how an arrangement of field and line delays provide vertically and temporally adjacent samples.

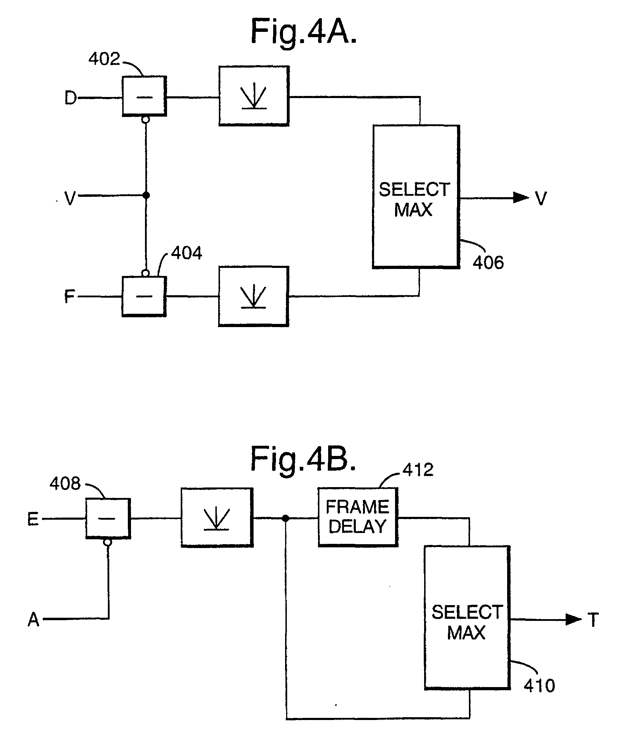

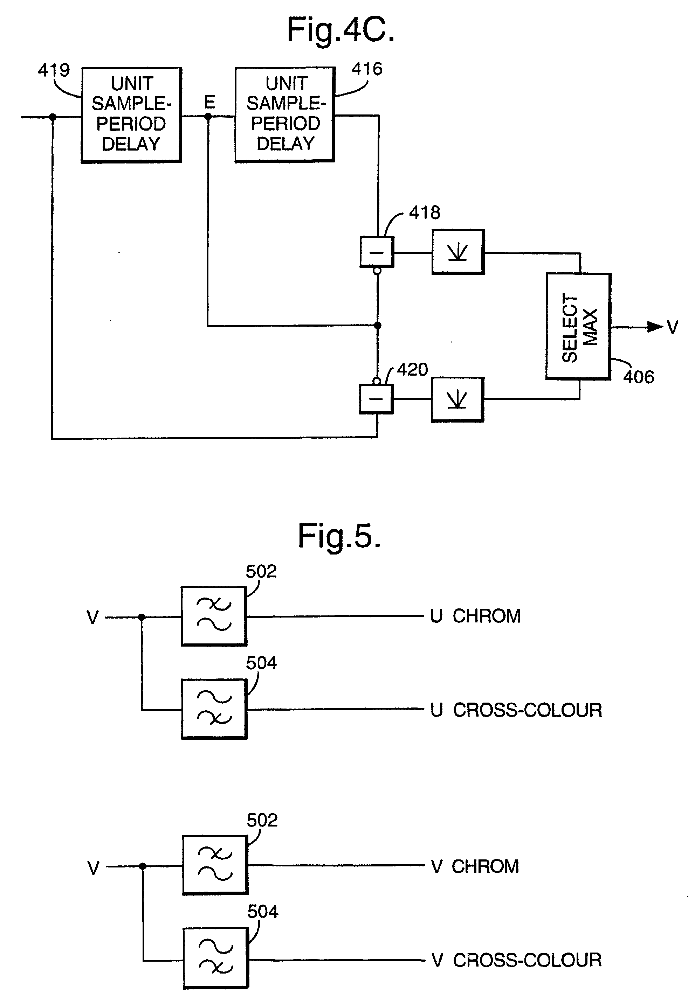

Figure 4 shows how the control signals for the look-up table (V,T and H) are derived by taking maximum values of the magnitudes of differences in sample values.

The array of chrominance/cross-colour separating filters could include (for example):

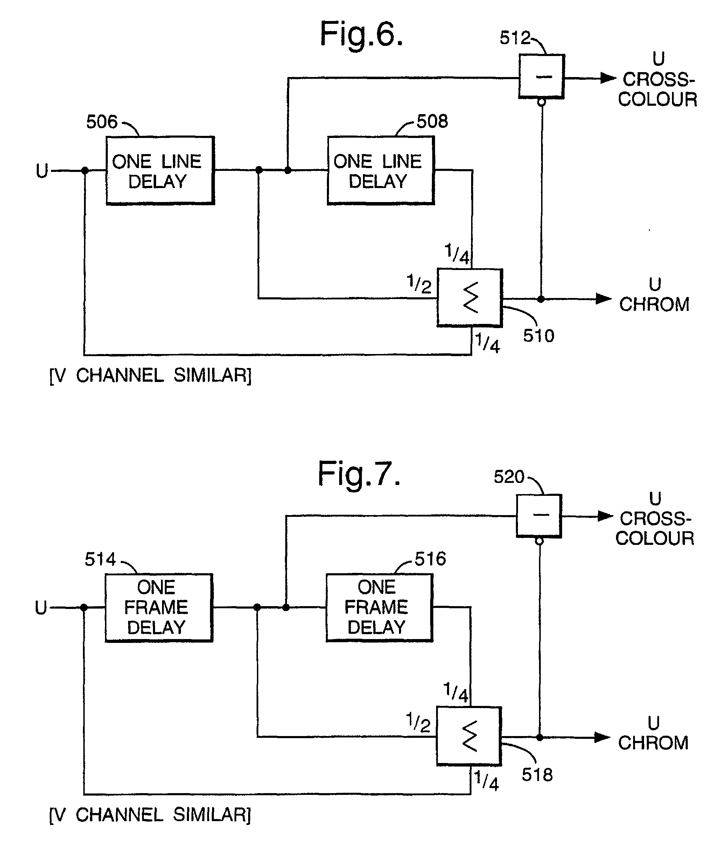

- a filter utilising line delays 506, 508; a weighted sum 510 and a subtractor 512 allocating low signal frequencies to chrominance and high signal frequencies to cross-colour (Figure 5).
- a filter allocating low vertical spatial frequencies to chrominance and high signal vertical spatial frequencies to cross-colour, in other words a spatial comb (Figure 6).
- a filter utilising frame delays 514, 516; a weighted sum 518 and a subtractor 520 allocating low temporal frequencies to chrominance and high temporal frequencies to cross-colour, in other words a temporal comb (Figure 7).
- a phase sensitive filter in which both the U and V inputs are used to determine each of the outputs.
- another filter comprising a linear combination of these filters.

In one arrangement, each of the horizontal, vertical and temporal differences is compared with a respective threshold value and the filters are selected in accordance with a table as follows:-

Table 1

| Horizontal difference above threshold | Vertical difference above threshold | Temporal difference above threshold | Filter selection |
|---|---|---|---|
| No | No | No | Temporal filter |
| No | No | Yes | Vertical filter |
| No | Yes | No | Temporal filter |
| No | Yes | Yes | Low/high pass filter |
| Yes | No | No | Temporal filter |
| Yes | No | Yes | Vertical filter |
| Yes | Yes | No | Temporal filter |
| Yes | Yes | Yes | Phase sensitive filter |

The above described embodiment of this invention is felt to offer a number of important advantages.

It can be seen from the block diagram that the section labelled low band filter actually passes some high frequency energy. This is because the high band low band split is not performed in the conventional way. The path which would normally be the high pass channel actually filters to the required chroma response symmetrical about Fsc with -3dB points in accordance with CCIR Report 624. The low band channel has a response substantially in accordance with the CCIR Recommendation 601 luminance filter specification from which is subtracted the response of the high pass channel.

This gives a system where chroma leaving the comb is correctly filtered to CCIR 624 and residual luminance rejected by the comb can be remodulated and added to the low band luminance with an overall luminance response in accordance with CCIR Recommendation 601.

The chroma rate converter operates on a demodulated signal. So the comb is presented with a base-band signal. This approach also gives the advantage that the chroma rate converter can be fabricated using reduced hardware due to the restricted bandwidth of this channel.

In addition, the peculiar characteristics of the luminance only rate converter channel leads to a flatter coefficient set than would otherwise be expected from a filter having a response to CCIR 601. This allows a more efficient use of the dynamic ranges within the FIR filter multipliers. Another feature of the design is that the filter paths are truly complementary. The phase values used for the rate conversion correspond on a one-to-one basis to those used for the remodulation. Each coefficient set is therefore orthogonal and complementary performance is independent of any rate converter phase errors. In addition, each phase set is individually optimised across both luminance and chrominance channels to provide a more rugged rate converter design.

Finally, the design incorporates a synchroniser which tracks input lines regardless of relationship to subcarrier phase. This allows better processing of non mathematical inputs as correct demodulation is assured whilst spatial accuracy is maintained.

Prior art sample rate converters use a phase accumulator which is incremented once per output sample and reset to zero infrequently (say once per frame or less) to control the selection of interpolation coefficients. In one embodiment of the present invention, the contents of the phase accumulator are set once per-line to a value which depends on the timing of each line sync pulse relative to an input sample clock.

This enables a 'colour-under' VCR output which has been digitised with a subcarrier-locked clock to be decoded and rate converted to line locked $YP_BP_R$ components with less timing jitter of the picture information with respect to the output sampling lattice.

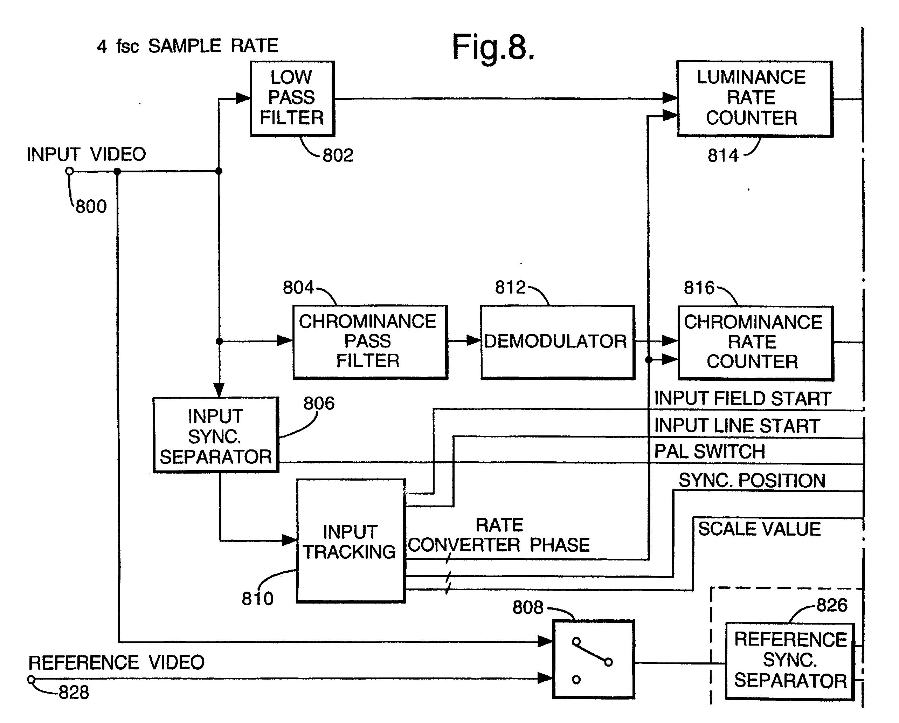

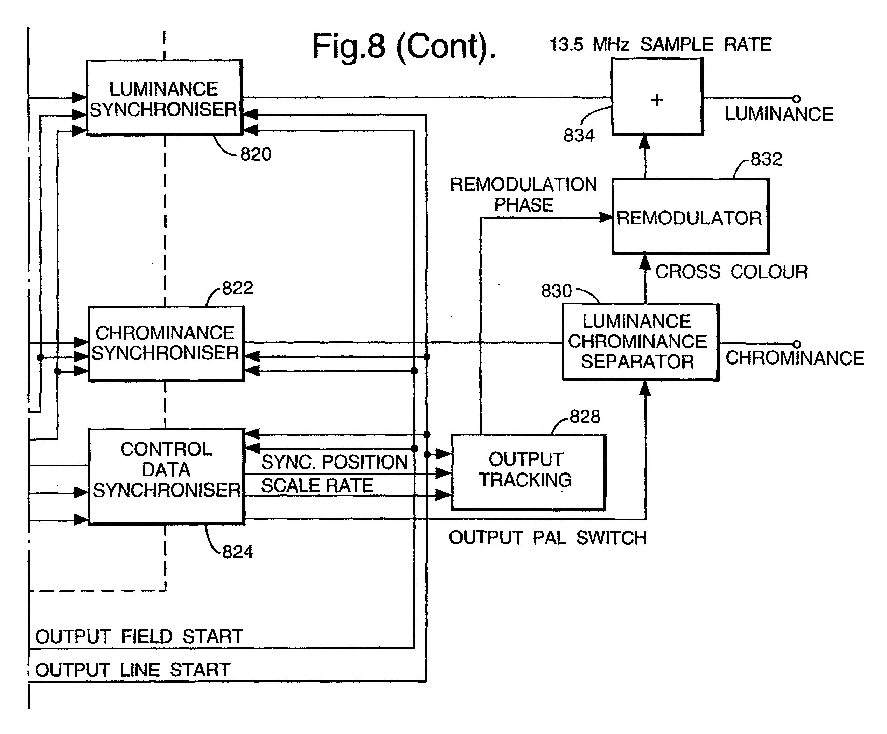

Reference is now directed to Figure 8 which is a block diagram of a decoder according to a further embodiment of the invention, with emphasis upon synchronisation considerations.

An input composite video signal sampled at four times sub carrier frequency received at input terminal 800 is passed to two filters 802 and 804, an input sync separator 806 and an output reference selector switch 808.

The input sync separator 806 identifies the phase of the Pal V-axis switch for the current line and passes the separated syncs to an input tracking circuit 810 which provides the following output signals:

a *field start* signal, which indicates the start of each field.

a *line start* signal which indicates the start of each line.

*a rate conversion phase* signal, which indicates the appropriate one of a set of interpolation coefficients to be applied to the current sample so as to convert it to a line locked sampling grid, and also indicates when it is necessary to drop input samples from the rate conversion process.

The input tracking circuit also provides the following signals at the start of every line:

a *sync position* signal, which indicates the position of the line sync timing reference point (ie the mid-point of the sync leading edge) relative to the sampling clock, expressed as an integer part, which is the phase quadrant of the sampling clock relative to the U sub-carrier phase axis, and a fractional part (which is a fraction of the clock interval).

a *scale value* giving the required ratio by which the current line's sampling rate must be converted to give a Rec. 601 line-locked clock.

The two filters which receive the input video comprise a low pass filter 802 which provides an output which is mainly luminance and a chroma pass filter 804 which provides an output which is mainly chrominance. This chrominance output passes to demodulator 812 where it is demodulated to base-band U and V signals using the known conventional relationship between the sampling clock and the required demodulation axes. For clarity of drawings, only a single line output is shown from the demodulator. The filtered luminance and the demodulated chrominance are fed to respective rate converters 814 and 816 which convert the sub carrier-locked input samples to a smaller number of line-locked output samples. The conversion is controlled in a known manner by the rate conversion phase signal which is provided to both the luminance rate converter 814 and the chrominance rate converter 816 by the input tracking circuit 810.

The rate converted luminance signal passes to a luminance synchroniser 820 in which the luminance signal is effectively written into a conventional line-locked frame store. This writing is controlled by the *input field start* and *input line start* signals received by the luminance synchroniser 820 from the input tracking circuit 810. A chrominance synchroniser 822 similarly receives the rate converted chrominance signal from the chrominance rate converter 816 and the *input field start* and *input line start* signals from the input tracking circuit 810. There is additionally provided a control data synchroniser 824 in the form of a store to which is written once per line the *PAL switch* signal from the input sync separator 806, and the *sync position* and *scale value* signals from the input tracking circuit 810.

The three synchronizers, that is to say the luminance synchroniser 820, the chrominance synchroniser 822 and the control data synchroniser 824 can be regarded as the effective interface between a <u>four</u> <u>fsc</u> sample rate domain and a 13.5 MHz sample rate domain. This is illustrated schematically by a dotted line in Figure 8.

An output reference sync separator 826 receives either the input video signal or a reference video signal provided at terminal 828 depending upon the position of output reference selector switch 808. The output reference sync separator 826 derives **output line start** and **output field start** signals, which control the reading of the luminance synchroniser 820 and chrominance sync 822 to produce line-locked luminance and baseband chrominance signals. The **output line start** and **output held start** signals are also used to control reading of the control data synchroniser 824. The **sync position** and **scale value** signals read from the control data synchroniser 824 are fed to an output tracking circuit 828 together with the **output line start** signal from the reference sync separator 826. The **PAL switch** signal read from the control data synchroniser 824 is passed to the chrominance/luminance separator 830.

The U and V chrominance signals from the chrominance synchroniser 822 are fed to the chrominance/luminance separator 830 which separates them into true U and V chrominance, and U and V axis cross-colour components.

The chrominance/luminance separator 830 will preferably take the form described in relation to the previous embodiment where there is provided an array of chrominance/luminance separating filters with the appropriate filter being selected on the basis of horizontal, vertical and temporal differences.

The two cross colour signals shown for clarity on a single line pass to remodulator 832 where they are re-modulated onto appropriate U and V chrominance carriers to give true luminance.

This remodulator circuit 822 is controlled by a **remodulation phase** signal which is generated in the output tracking circuit 828. This signal defines the phase of sub-carrier at the time of each line-locked output sample.

The remodulated cross-colour signal is added in luminance adder 834 to the output of the luminance synchroniser to give a luminance output on luminance output terminal 836.

The U and V chrominance outputs of the luminance/chrominance separator 830 form the decoder's chrominance output on chrominance output terminal 838.

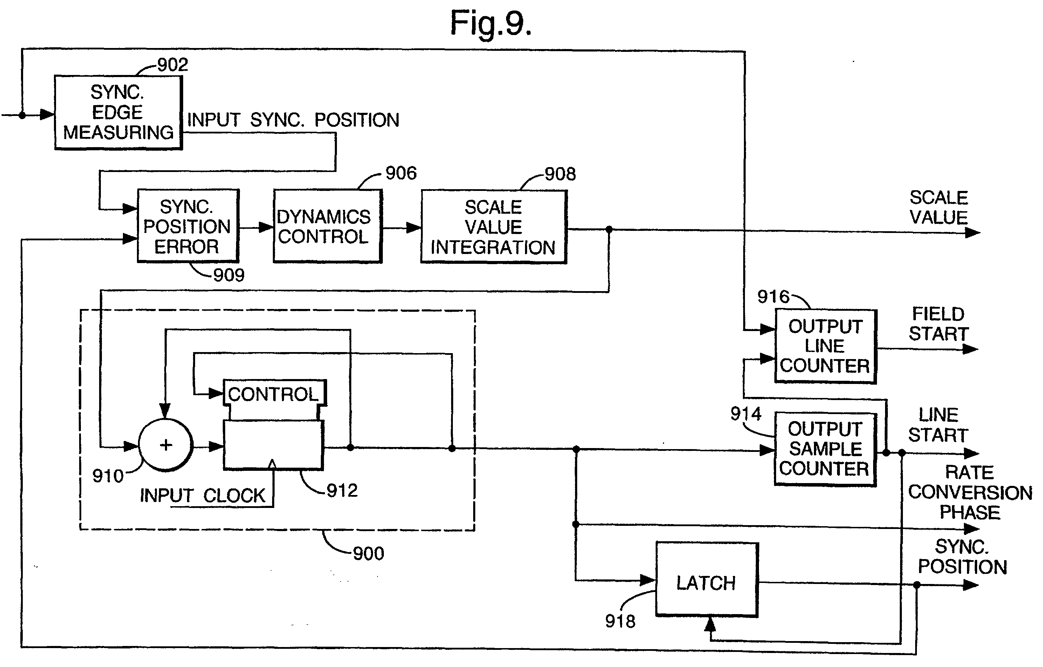

The input tracking circuit 810 will now be described in more detail with reference to Figure 9. As has been described, the input tracking circuit 810 generates the **rate conversion phase control** signal for the rate converters 814 and 816 and the **scale value** signal (which indicates the value of the conversion ratio for each line).

Generally speaking, the input tracking circuit uses a phase accumulator (shown in dotted outline at 900 in Figure 9) whose content gives the **conversion phase control** signal. The accumulator is incremented on those input (sub-carrier locked) clock pulses at which output samples are generated by the rate converters. The value of the increment depends on the error between the actual measured input sync position and the position derived by counting the number of (line-locked) samples generated by the rate converters.

In more detail, the **input sync** signal from the input sync separator 806 passes to a sync edge measuring circuit 902. The position of the input sync leading edge mid-point is computed relative to the line-locked sampling clock in this sync edge measuring circuit 902. The difference between this position and the position indicated by the phase accumulator is measured in a sync position error circuit 904 which receives the output of the sync measuring circuit 902 and the **sync position** signal which is an output of the input tracking circuit 810. This **sync position error** signal is applied to a dynamic control filter 906, which controls the dynamics of the phase accumulator feedback loop.

The filtered error signal from the dynamics control filter 906 passes to **scale value** integrator 908 where it is integrated to give the scale value signal, which is an output of the input tracking circuit 810. This **scale value** signal is also used to increment the phase accumulator 900.

The phase accumulator 900 includes in addition to adder 910 a control circuit 912 which ensures that the number of times the accumulator is incremented is equal to the required number of line-locked samples. This means that although it is clocked at input clock rate, some clock pulses are inhibited by the control circuit 912 so as to reduce the number of increments per line to the number of samples per line required by the Rec. 601 sampling standard.

An output sample counter 914 receivers the **rate converter phase signal** and is thus incremented every time the rate converters produce an output sample. This counter generates the **line start** signal which is an output of the input tracking circuit 810 fed to the control data synchroniser 824, and which is also counted by an output line counter 916, which generates a **field start** signal.

The **rate converter phase** signal from the accumulator is also passed to latch 918 where it is latched by the **line start** signal to give the **sync position** signal which is an output of the input tracking circuit sent to the control data synchroniser.

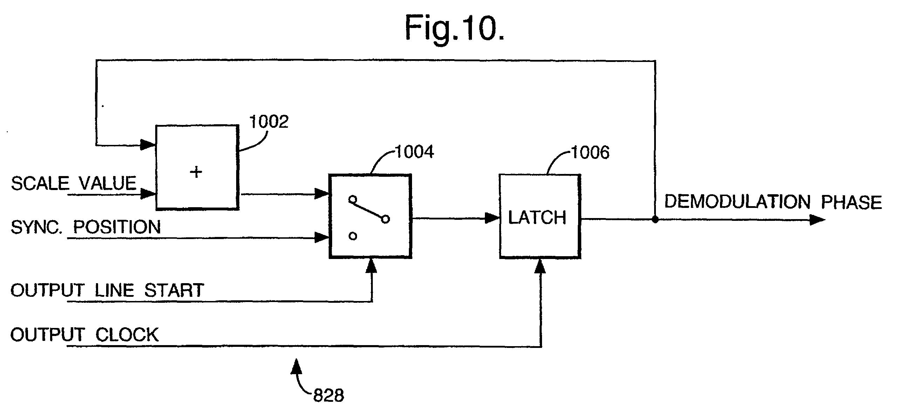

The output tracking circuit 828 of Figure 8 will now be described in more detail with reference to Figure 10.

The output tracking circuit is a phase accumulator working at output (line-locked) clock rate.

At the start of each output line, the accumulator is loaded with the **sync position** signal from the control data synchroniser 824. The accumulator is incremented once per output clock by the **scale value** signal from the control data synchroniser.

The content of the accumulator represents the sub-carrier phase corresponding to the current output sample. Thus adder 1002 receives the **scale value** signal and the **output remodulation phase** signal. A scale value switch 1004 is controlled by the output line start signal to select between the output of adder 1002 and the **sync position** signal. The output of the scale value switch 1004 is latched by the output clock signal in latch 1006 to provide the **remodulation phase** signal which is the output of this output tracking circuit.

The above described embodiment of this invention offers a number of important advantages.

Thus, the phase accumulator 900 runs continuously and under normal operating conditions is never reset to the start of the line or frame. A hard reset occurs only after signal loss or a 'hot' cut or at initialisation. The phase accumulator operates at the input pixel rate but in output pixel space, generating the 'footprint' of each output pixel on the input data. When an output pixel boundary is crossed, the output pixel counter is incremented. The fractional value of each output pixel boundary position (in input space) is used to select filter coefficient data from a polyphase coefficient set.

The converter operation is completely one dimensional, the line count of the output data is generated directly from the input data stream.

The phase accumulator 900 uses a variable 'scale value' to calculate the output pixel 'footprint'. This value may be continuously adjusted to suit fluctuations in the input data line length. At the end of each line the boundary of the first pixel of the next scan-line in output space is compared with the exact value of the input line synchronising edge, sampled to fractional accuracy; to generate a conversion alignment error signal. This signal is used to control the size of the 'scale value' providing the negative feedback necessary to keep the phase accumulator continuously aligned.

The filter network 906 included between the error measurement and the phase accumulator gives dynamic control over the loop characteristics of the 'phase locked loop' type system. By these means the overall dynamics of the complete converter may be controlled to suit different input types. Hence the phase accumulator is capable of tracking input signals with timebase errors or incorrect mathematical structures.

In the case of input timing errors from a system which has been encoded or transcoded with an accurate subcarrier (such as a 'colour under' VCR) the higher frequency luminance components will be aligned with the subcarrier frequency. The dynamic rate converter system correctly aligns the data to the correct line period (providing spatial coherence) whilst retaining the correct relationship between the input sampling frequency and any previously modulated high frequency luminance information (this is because the stream is demodulated before the spatial realignment). These two factors allow more reliable reconstruction of this high frequency luminance after the remodulation stage. Note that a perfect alignment would only be possible if the band splits in the rate converter and the 'colour under' transport were identical.

The subcarrier which drives the luminance remodulator is derived from the output clock in a known manner by incrementing a (subcarrier) phase accumulator once per output clock. If the input subcarrier-to-line phase relationship is unstable (perhaps because the input is from a colour-under VCR) the prior art calculation of remodulation phase will be inaccurate because of the time delay (due to the propagation delay of the comb-filter) between the interpolation of the samples (from the input to the output clock) and the remodulation.

In this embodiment, the (subcarrier) phase accumulator is loaded once per line with a phase value. This value is determined from the phase of the input line sync pulse relative to the phase of the input sampling clock. The number loaded comprises an integer number of quarter cycles of subcarrier plus an offset value. The value is determined following each input line sync pulse and stored for a time equal to the propagation delay from the input to the luminance remodulator before being input to the (subcarrier) phase accumulator.

The data to be remodulated in the remodulator 832 must be sampled at the full output sampling rate before remodulation; in certain circumstances, however, the remodulation data may be spectrally confined to a quarter of the sampling rate and may therefore be processed through the separator at half the sampling rate. In this case an interpolator (of the half-band type) is required to convert to the full sampling rate before remodulation. If remodulation at this half-sampling rate is performed, however, aliasing will occur about the half-sampling rate and the resulting high frequency luminance will be unusable.

There is one-to-one correspondence between the rate converter phases and the remodulation quadrature multiplier coefficient sets. This relationship is also present in the rate converter filter coefficient generation process. Each phase of the base-band filter is generated by subtraction of the corresponding demodulated phase value from an ideal CCIR Recommendation 601 type luminance filter after modulation by one of the set of quadrature components. Hence for a given phase selection value n:

$$BB(n) = SB(n) - DM(n) * \cos(n)$$

Where:

    BB = Base-band coefficient
    SB = Required system performance coefficient
    DM = Demodulated band coefficient

For the remodulation the time domain output may be represented thus:

$$RM(n) = DM(n) * \cos(n)$$

Whence the combined output in the time domain **O(n)**:

$$O(n) = BB(n) + RM(n)$$

$$= SB(n)$$

Therefore, the output provides the equivalent performance <u>independently</u> of the phase value n. Each remodulated output sample corresponds exactly in phase space to the point at which it was demodulated. More importantly, each phase coefficient set is completely orthogonal and apart from spatial accuracy the number of sets has no effect on remodulation phase accuracy. High phase accuracy can therefore be obtained with a relatively coarse set of phases.

## Claims

1. A method of separating chrominance and luminance information, comprising the steps of applying a chrominance luminance separation filter to a combined chrominance and high frequency luminance base-band which has been demodulated, and carrying forward information concerning the phase of demodulation for use in remodulation of cross-colour so as to permit precise combination of remodulated cross-colour and luminance.

2. Apparatus for receiving a composite video signal in a first digital sample domain and providing separated luminance and chrominance in a second digital sample domain; comprising complementary chrominance and luminance filter paths, each path containing a rate converter operating from the first to the second digital sample domain, wherein there is provided in the chrominance filter path a demodulator and a chrominance/cross-colour separation filter operating on the demodulated chrominance, separated cross-colour passing through a remodulator before combination with the output of the luminance filter path, information from the demodulator being carried forward for use by the remodulator.

3. Apparatus according to Claim 2, wherein there is provided in each said path a synchroniser controlled at its output by output field and line syncs.

4. Apparatus according to Claim 3, there being further provided a control data synchroniser for said information, similarly controlled at its output by output field and line syncs.

## Patentansprüche

1. Verfahren zum Trennen von Chrominanz- und Luminanzinformation, das die Schritte umfasst, wonach ein Chrominanz-Luminanz-Trennfilter auf ein kombiniertes Chrominanz- und Hochfrequenz-Luminanz-Basisband, das demoduliert worden ist, angewendet wird und Vorwärtsinformation, die die Phase der Demodulation zur Verwendung bei einer Remodulation bzw. erneuten Modulation einer Übersprech-Farbe betrifft, getragen wird, um so eine präzise Kombination einer remodulierten Übersprech-Farbe und Luminanz zu erlauben.

2. Apparat zum Empfangen eines zusammengesetzten Videosignals in einer ersten digitalen Abtastdomäne und zum Bereitstellen getrennter Luminanz und Chrominanz in einer zweiten digitalen Abtastdomäne; der komplementäre Chrominanz- und Luminanz-Filterpfade umfasst, wobei jeder Pfad einen Raten-Konverter enthält, der von der ersten zu der zweiten digitalen Abtastdomäne arbeitet, wobei in dem Chrominanzfilterpfad ein Demodulator und ein Chrominanz/Übersprech-Farbe-Trennfilter vorgesehen ist, der mit der demodulierten Chrominanz arbeitet bzw. darauf einwirkt, wobei separierte Übersprech-Farbe durch einen Remodulator vor einer Kombination mit dem Ausgangssignal des Luminanz-Filterpfades hindurchgelangt, wobei Information von dem Demodulator zur Verwendung durch den Remodulator weiter getragen wird.

3. Apparat nach Anspruch 2, bei welchem in jedem Pfad ein Synchronisierer vorgesehen ist, der an seinem Ausgang durch ein Ausgangsfeld bzw. -halbbild und Zeilensynchronisationen bzw. Zeilensynchronisationssignale gesteuert wird.

**4.** Apparat nach Anspruch 3, wobei weiter ein Steuerdaten-Synchronisierer für die Information vorgesehen ist, der in ähnlicher Weise an seinem Ausgang durch ein Ausgangsfeld bzw. -halbbild und Zeilensynchronisationen bzw. Zeilensynchronisationssignale gesteuert wird.

**Revendications**

**1.** Procédé de séparation d' informations de chrominance et de luminance, comprenant les étapes d'application d'un filtre de séparation de chrominance et de luminance à une bande de base de chrominance et de luminance haute fréquence mélangées qui a été démodulée, et comportant des informations transportées en avant concernant la phase de démodulation pour utilisation dans une remodulation de la diaphotie afin de permettre une combinaison précise de la diaphotie et de la luminance remodulées.

**2.** Appareil pour recevoir un signal vidéo composite dans un premier domaine d'échantillonnage numérique et pour fournir la luminance et la chrominance séparées dans un second domaine d'échantillonnage numérique ; comprenant des trajets de filtre de chrominance et de luminance complémentaires, chaque trajet contenant un convertisseur de débit fonctionnant du premier vers le second domaine d'échantillon numérique, où il y a dans le trajet de filtre de chrominance un démodulateur et un filtre de séparation chrominance/diaphotie fonctionnant sur la chrominance démodulée, la diaphotie séparée passant à travers un remodulateur avant combinaison avec la sortie du trajet de filtre de luminance, des informations provenant du démodulateur étant transportées en avant pour utilisation par le remodulateur.

**3.** Appareil selon la revendication 2, dans lequel il y a, dans chaque dit trajet, un synchroniseur commandé sur sa sortie par des synchronisations de trame et de ligne de sortie.

**4.** Appareil selon la revendication 3, dans lequel il y a en outre un synchroniseur de données de commande pour lesdites informations, similairement commandé sur sa sortie par des synchronisations de trame et de ligne de sortie.

# Fig.1.

DIGITAL
D2/D3
INPUT
○ 100

SMPTE 259
EXTRACTION  106

PRE-PROC  118

ADC  109

102
○
ANALOGUE
INPUT

CHROMA
FILTER  110

ISC

DEMODULATOR  112

RATE
CONVERTER  114

LOW BAND
FILTER  118

RATE
CONVERTER  120

LOW BAND
COMPENSATING
DELAY AND MOTION
DETECTION  122

H    V    T

COMB

116

LUT
FUZZY ADAPTION

REMOD
124

+  126

PATTERN GENERATOR
ENHANCER FORMATTER

OUTPUTS

○ YUV

○ GBR

○ CCIR
656

EP 0 893 031 B1

# Fig.2.

LOW BAND
FILTERED
COMPOSITE
INPUT

V = 312 (262)
V'=311 (261)

H=1 LINE PERIOD

# Fig.3.

## Fig.4A.

## Fig.4B.

# Fig.4C.

# Fig.5.

# Fig.6.

512

506

508

U —▶ | ONE LINE DELAY |

| ONE LINE DELAY |

| — | ▶ U CROSS-COLOUR

¹/₄

¹/₂ | ≶ | ▶ U CHROM

510

¹/₄

[V CHANNEL SIMILAR]

# Fig.7.

520

514

516

U —▶ | ONE FRAME DELAY |

| ONE FRAME DELAY |

| — | ▶ U CROSS-COLOUR

¹/₄

¹/₂ | ≶ | ▶ U CHROM

518

¹/₄

[V CHANNEL SIMILAR]

Fig.8.

4 fsc SAMPLE RATE

LOW PASS FILTER ~802

INPUT VIDEO ~800

LUMINANCE RATE COUNTER 814~

804~ CHROMINANCE PASS FILTER

812~ DEMODULATOR

816~ CHROMINANCE RATE COUNTER

INPUT SYNC. SEPARATOR 806

INPUT FIELD START

INPUT LINE START

PAL SWITCH

SYNC. POSITION

INPUT TRACKING 810

RATE CONVERTER PHASE

SCALE VALUE

808 ~

REFERENCE VIDEO ~828

826~ REFERENCE SYNC. SEPARATOR

EP 0 893 031 B1

Fig.8 (Cont).

EP 0 893 031 B1

## Fig.9.

SYNC.
EDGE
MEASURING — 902

INPUT SYNC. POSITION

SYNC.
POSITION
ERROR — 909

DYNAMICS
CONTROL — 906

SCALE
VALUE
INTEGRATION — 908

SCALE
VALUE

CONTROL

INPUT CLOCK — 912

910

900

OUTPUT
LINE
COUNTER — 916

FIELD
START

OUTPUT
SAMPLE
COUNTER — 914

LINE
START

RATE
CONVERSION
PHASE

LATCH — 918

SYNC.
POSITION

EP 0 893 031 B1

# Fig.10.

SCALE VALUE

SYNC. POSITION

OUTPUT LINE START

OUTPUT CLOCK

1002

1004

1006

+

LATCH

DEMODULATION PHASE

828

EP 0 893 031 B1